# EUROPEAN PATENT APPLICATION

(11) **EP 4 459 289 A1**
(43) Date of publication of application: **06.11.2024**
(21) Application number: 23171856.0
(22) Date of filing: 05.05.2023
(51) Int. Cl.: G01N 35/00, G01N 35/10

(54) **METHOD AND INSTRUMENT FOR ALIQUOTING A BIOLOGICAL SAMPLE**

(71) Applicant: Beckman Coulter, Inc., Brea, CA 92821 (US)
(72) Inventor: MUELLER, Martin, 83727 Schliersee (DE); REICHLE, Roland, 80689 Munich (DE); LAUTERBACH, Sophia, 80809 Munich (DE); SICKERT, Manuel, 86932 Puergen (DE)
(74) Representative: Maiwald GmbH

(57) **Abstract**

Summarizing the invention, a method is provided. The method comprises: instructing a laboratory instrument comprising an aspirating/dispensing device to aliquot a drawing volume of a biological sample contained in a primary sample container; determining that an error has occurred, wherein the error affects at least one of: the laboratory instrument, a state of the biological sample, and a state of a secondary sample container configured to receive the drawing volume; selecting, based on at least one of a type of the error and a time point at which it is determined that the error has occurred, an action from a plurality of actions to be performed by the laboratory instrument, wherein the plurality of actions comprise a reinsertion action that comprises dispensing the drawing volume to the primary sample container; and instructing the laboratory instrument to perform the selected action.

## Description

### Technical Field

The following description relates to the field of testing of biological samples.

### Background

Sample containers are used for holding samples to be tested, e.g. biological samples drawn from a human or animal subject, such as blood samples. Typically, the biological sample is collected at a first location, e.g. by a phlebotomist, and is then transported to a second location for testing/analysis, e.g. to a laboratory. Analytic and clinical laboratories comprise laboratory instruments that are configured to automatically carry out one or more clinical tests on the biological sample.

In some cases, one or more sub-samples (or "aliquots") are drawn from the biological sample contained in the (primary) sample container and transferred to respective one or more secondary sample containers. Aliquoting is performed to preserve the integrity of the biological sample and to efficiently carry out, e.g. parallelize, different clinical tests. The aliquoting is carried out by an aspirating/dispensing device, such as a pipettor with pipette tip, configured to aspirate and dispense liquid.

Conventionally, if an error occurs during the aliquoting procedure, e.g. while the aliquot is in the aspirating/dispensing device, the pipette tip containing the aliquot is always discarded.

### Summary

It is an object of the invention to improve the aliquoting of a biological sample in order to reduce sample waste.

The achievement of this object in accordance with the invention is set out in the independent claims. Further developments of the invention are the subject matter of the dependent claims.

According to a first aspect of the invention, a method, in particular a computer-implemented method, is provided. The method comprises:
- instructing a laboratory instrument comprising an aspirating/dispensing device to aliquot a drawing volume of a biological sample contained in a primary sample container;
- determining that an error has occurred, wherein the error affects at least one of: the laboratory instrument, a state of the biological sample, and a state of a secondary sample container configured to receive the drawing volume;
- selecting, based on at least one of a type of the error and a time point at which it is determined that the error has occurred, an action from a plurality of actions to be performed by the laboratory instrument, wherein the plurality of actions comprise a reinsertion action that comprises dispensing the drawing volume to the primary sample container; and
- instructing the laboratory instrument to perform the selected action.

The computer-implemented method may be carried out by at least one processor. In particular, the at least one processor may be comprised in the laboratory instrument and may be configured to control the laboratory instrument. Exemplarily, the at least one processor may be connected to at least one memory.

The laboratory instrument comprising the aspirating/dispensing device may be configured to carry out one or more pre-analytical steps on biological samples to prepare said samples for being tested by an analyser, i.e. an apparatus configured to carry out one or more clinical tests on a biological sample. In particular, the laboratory instrument may be configured to perform aliquoting of biological samples.

A biological sample may be a sample of a bodily fluid of a human or animal subject. For example, the bodily fluid may be a physiological fluid, such as blood, saliva, urine, sweat, amniotic fluid, cerebrospinal fluid, ascites fluid, or the like. The biological sample may comprise one or more components that may potentially comprise analytes of interest for performing at least one clinical test. For instance, blood serum, blood cells and blood plasma are components of a blood sample.

A clinical test may comprise one or more procedures that, when carried out on the biological sample or on a component thereof, allow for estimating the value of a parameter, e.g. a clinical parameter. In particular, a clinical test may comprise physical, biological, optical, mechanical, immunological, and/or chemical procedures.

Generally, a sample container is configured to receive and hold a biological sample. Accordingly, the sample container may comprise an opening for receiving the sample and a bottom as well as one or more walls to hold the sample, wherein the opening may be configured to be releasably closed by a closing element, e.g. a cap. In particular, the sample container may have a substantially cylindrical shape (i.e. a cylindrical wall), with the opening at one base and the bottom at the opposite base. The sample container may also be referred to as "tube".

Generally, the aspirating/dispensing device comprises a dispenser capable of aspirating a fluid (e.g. a liquid), i.e. transferring a volume of fluid from the exterior of the dispenser to the interior of the dispenser, as well as of dispensing liquid, i.e. transferring a volume of fluid from the interior of the dispenser to the exterior of the dispenser. Accordingly, the dispenser is also capable of holding the fluid, e.g. after having aspirated it and before dispensing it. Specifically, the dispenser may be configured to aspirate a fluid volume from a sample container holding a biological sample (e.g. a liquid biological sample), the fluid volume being a portion of the biological sample. In particular, the dispenser is configured to dispense a fluid volume into a sample container.

Exemplarily, the dispenser may comprise a pipettor and a pipette tip, and the fluid may be held in the pipette tip. The pipettor may be configured to perform the act of fluid transfer, e.g. it may comprise mechanical elements for aspirating/dispensing the fluid, such as a pump. The pipettor may be configured to hold the pipette tip, wherein the pipette tip may be releasably mounted to the pipettor. Exemplarily, the pipette tip may be disposable, and it may be changed after all aspiration/dispensation cycles relative to a given biological samples have been completed. The aspirating/dispensing device may collect a new pipette tip prior to aspirating a volume of a given biological sample for the first time and may discard the used pipette tip after dispensing a volume of the given biological sample for the last time.

Exemplarily, the dispenser is configured so that, during aspiration, at least a portion of the pipette tip is arranged inside a primary sample container and below the liquid level of the biological sample contained in the primary sample container. The dispenser may be configured so that, during dispensation, at least a portion of the pipette tip is arranged inside a sample container, into which the liquid volume comprised in the pipette tip is to be dispensed. In particular, the dispenser is configured so that, if the laboratory instrument is instructed to perform the reinsertion action, during dispensation in the primary sample container at least a portion of the pipette tip is arranged inside the primary sample container.

The laboratory instrument may comprise one or more moving components to move the aspirating/dispensing device in the three-dimensional space. The aspirating/dispensing device may be moved as a whole and/or only components thereof may be moved, such as the dispenser. In the latter case, the moving component(s) may be comprised in the aspirating/dispensing device itself.

Exemplarily, if a Cartesian coordinate system having three mutually orthogonal axes, x, y and z is assigned to the three-dimensional space, the moving component(s) may move the aspirating/dispensing device parallel to any of the axes, so that the movement of the aspirating/dispensing device may be a composite of translations parallel to the three axes. Additionally or alternatively, the movement may include rotations on one, two or three of the axes. In particular, in operation, the z axis may be a vertical axis, i.e. an axis parallel to the direction of the Earth's gravitational pull, while the x and y axes may define a horizontal plane orthogonal to the direction of the Earth's gravitational pull.

For example, the aspirating/dispensing device may move in the horizontal plane when moving across various locations, e.g. within the laboratory instrument, and may move along the vertical axis when moving in and out of containers. Exemplarily, only the dispenser may move along the vertical axis, while the rest of the aspirating/dispensing device may not.

For instance, the one or more moving components may be motors and/or robots, e.g. an *x-y* gantry robot configured to move the aspirating/dispensing device as a whole in the horizontal plane and a servomotor (e.g. comprised in the aspirating/dispensing device) configured to move the dispenser along the z axis.

The method comprises instructing the laboratory instrument to aliquot the drawing volume of the biological sample contained in the primary sample container.

Instructing the laboratory instrument to perform an action, e.g. to aliquot the drawing volume or to perform the selected action, as part of the computer-implemented method may comprise controlling, by the processor of a computing device carrying out the method of the present invention, the laboratory instrument, in particular one or more components of the laboratory instrument, e.g. the aspirating/dispensing device and the moving component(s), to perform that action, e.g. the selected action. For instance, instructing the laboratory instrument to perform an action comprises sending, by a processor, one or more electromagnetic signals to the laboratory instrument, in particular to one or more components of the laboratory instrument, e.g. the aspirating/dispensing device and the moving component(s), to prompt the laboratory instrument to carry out that action. In particular, the one or more electromagnetic signals comprise information specifying the action that the laboratory instrument shall carry out. Additionally or alternatively, instructing the laboratory instrument to perform an action may comprise instructing, by the processor of the computing device carrying out the method of the present invention, a processor comprised in the laboratory instrument to control the laboratory instrument to perform that action.

Typically, a complete, successful aliquoting process comprises a series of operations carried out by the laboratory instrument. Specifically, the operations may comprise at least an aspiration from a primary sample container, a transfer and a dispensation into a secondary sample container. The primary sample container and the secondary sample container are both sample containers as described above. They may have identical features or they may have one or more differing features, such as shape, material and/or size.

The aspiration is carried out by the aspirating/dispensing device, which aspirates the drawing volume of biological sample from the primary sample container. The primary sample container is the sample container that initially holds the biological sample, e.g. the whole biological sample as collected from a human or animal subject. The biological sample contained in the primary sample container has a total volume. The dispenser of the aspirating/dispensing device is configured to aspirate a drawing volume from this total volume, wherein the drawing volume is a sub-volume of (i.e. a fraction of) the total volume or coincides with the total volume. Typically, the sub-volume is a smaller volume than the total volume.

The dispensation is carried out by the aspirating/dispensing device, which dispenses the drawing volume of biological sample into at least one secondary sample container. Accordingly, a secondary sample container is a sample container that holds (at least part of) the drawing volume only after receiving it from the dispenser. In particular, when a secondary sample container is initially loaded in the laboratory instrument, it does not contain any fraction of biological sample, e.g. it may be empty or it may contain one or more substances such as a reagent.

In particular, the dispenser of the aspirating/dispensing device may be configured to dispense the drawing volume. In some examples, the dispenser may dispense the whole drawing volume to one secondary sample container. In other examples, the dispenser may exemplarily be configured to distribute the drawing volume among a plurality of secondary sample containers, so that each secondary sample container receives a fraction of the drawing volume. The dispenser may be configured to dispense a plurality of fractions of the drawing volume, wherein the sum of the fractions substantially equals the drawing volume, to a respective plurality of secondary sample containers in a temporal sequence, i.e. temporally one after the other.

For instance, in some cases, the dispenser may be configured to aspirate the whole drawing volume at once and then dispense fractions of it to a plurality of secondary sample containers. In other cases, the dispenser may be configured to carry out a plurality of aspiration/dispensation cycles, wherein in each cycle the dispenser aspirates a fraction of the drawing volume from the primary sample container and dispenses said fraction to a secondary sample container.

In the following, the case in which the drawing volume is dispensed to one secondary sample container will be discussed, unless stated otherwise, however the same principles apply to the case in which the drawing volume is distributed among a plurality of secondary sample containers.

In one example, the transfer may comprise moving the aspirating/dispensing device from an aspirating position at which the aspirating/dispensing device aspirates the drawing volume from the primary sample container to a dispensing position at which the aspirating/dispensing device dispenses the drawing volume to the secondary sample container. In this case, the transfer may be carried out by the one or more moving components discussed above.

In particular, the aspirating position may be a position in which the dispenser is at least partly (e.g. at least a portion of its pipette tip) within the primary sample container and the rest of the aspirating/dispensing device is above the primary sample container. Similarly, the dispensing position may be a position in which the dispenser is at least partly (e.g. at least a portion of its pipette tip) within the secondary sample container and the rest of the aspirating/dispensing device is above the secondary sample container.

Accordingly, the transfer may comprise transferring the aspirating/dispensing device from the primary sample container to the secondary sample container. More specifically, the transfer may comprise:
- moving the dispenser along the vertical axis from the aspirating position to a position in which the dispenser is also above the primary sample container, so that the dispenser is completely outside of the primary sample container;
- moving the aspirating/dispensing device from the position above the primary sample container to a position above the secondary sample container, wherein the movement occurs e.g. in the horizontal plane;
- moving the dispenser along the vertical axis from the position above the secondary sample container to the dispensing position.

In an alternative example, the aspirating/dispensing device may be at a fixed position and the transfer may comprise moving the primary sample container away from this fixed position and moving the secondary sample container to this fixed position, e.g. by a conveyor belt.

The aspiration is a finite process having an aspiration starting time and an aspiration end time, wherein the time interval between the aspiration starting time and the aspiration end time is the duration of the aspiration. Similarly, the dispensation, when carried out by the aspirating/dispensing device, is a finite process having a dispensation starting time and a dispensation end time, wherein the time interval between the dispensation starting time and the dispensation end time is the duration of the dispensation. The aspiration and dispensation seen as processes in time may be also referred to as "aspiration phase" and "dispensation phase", respectively.

The transfer (e.g. of the aspirating/dispensing device between the aspirating position and the dispensing position) is also a finite process having a transfer starting time and a transfer end time, wherein the time interval between the transfer starting time and the transfer end time is the duration of the transfer. The transfer seen as a process in time may also be referred to as "transfer phase".

As mentioned above, a complete aliquoting process comprises at least the aspiration phase, the transfer phase and the dispensation phase. Optionally, the aliquoting process may comprise additional phases, i.e. the laboratory instrument may perform additional operations when carrying out the aliquoting process.

Exemplarily, the set of operations performed by the laboratory instrument in sequential temporal order may be the following:
- moving, by the at least one moving component, the aspirating/dispensing device to a collecting position (e.g. corresponding to the position of a storage station, which may be a receptacle that is configured to contain a plurality of new pipette tips);
- collecting, by the aspirating/dispensing device, a pipette tip e.g. from the storage station (which comprises mounting the pipette tip to the pipettor);
- moving, by the at least one moving component, the aspirating/dispensing device from the collecting position to the aspirating position;
- aspirating, by the aspirating/dispensing device, the drawing volume from the primary sample container;
- moving, by the at least one moving component, the aspirating/dispensing device from the aspirating position to the dispensing position;
- dispensing, by the aspirating/dispensing device, the drawing volume to the secondary sample container;
- moving, by the at least one moving component, the aspirating/dispensing device from the dispensing position to a discarding position (e.g. corresponding to the position of a waste station, which may be a receptacle that is configured to contain a plurality of used pipette tips);
- discarding, by the aspirating/dispensing device, the used pipette tip (which comprises unmounting the pipette tip from the pipettor).

Similarly to what described for the sample containers, the dispenser may be configured to move in and out of the storage station and/or the waste station.

Each of the operations described above may be associated to a corresponding phase in time, similarly to the other phases discussed above.

In some cases, as mentioned, there may be more than one aspiration/dispensation cycle with the same biological sample. If this is the case, in particular, the set of operations performed by the laboratory instrument in sequential temporal order may be the following:
a) moving, by the at least one moving component, the aspirating/dispensing device to the collecting position;
b) collecting, by the aspirating/dispensing device, the pipette tip e.g. from the storage station (which comprises mounting the pipette tip to the pipettor);
c) moving, by the at least one moving component, the aspirating/dispensing device from the collecting position to the aspirating position;
d) aspirating, by the aspirating/dispensing device, a fraction of the drawing volume from the primary sample container;
e) moving, by the at least one moving component, the aspirating/dispensing device from the aspirating position to the dispensing position;
f) dispensing, by the aspirating/dispensing device, the fraction of the drawing volume to the secondary sample container;
g) moving, by the at least one moving component, the aspirating/dispensing device from the dispensing position to the aspirating position;
h) repeating steps d) to f) until the whole drawing volume has been dispensed into the secondary sample containers;
i) moving, by the at least one moving component, the aspirating/dispensing device from the dispensing position to the discarding position; and
j) discarding, by the aspirating/dispensing device, the used pipette tip.

In light of the discussion above, instructing the laboratory instrument to aliquot the drawing volume of the biological sample contained in the primary sample container may be considered as a "coarse" instruction that may comprise one or more "fine" instructions. In other words, instructing the laboratory instrument to aliquot the drawing volume may comprise instructing the laboratory instrument to perform one or more of the operations described above.

In particular, instructing the laboratory instrument to aliquot the drawing volume is a finite process, i.e. it has an instructing starting time and an instructing end time, wherein the time interval between the instructing starting time and the instructing end time is the duration of the instructing.

Specifically, instructing the laboratory instrument to aliquot the drawing volume may comprise instructing the laboratory instrument to perform a first operation, then instructing the laboratory instrument to perform a second operation once the first operation has been performed, then instructing the laboratory instrument to perform a third operation once the second operation has been performed, and so on.

In particular, the method may comprise instructing the laboratory instrument to perform the whole set of operations described above when no error affects the aliquoting process. Thus, exemplarily, instructing the laboratory instrument to aliquot the drawing volume may comprise the following set of instructing steps:
- instructing the at least one moving component to move the aspirating/dispensing device to the collecting position;
- instructing the aspirating/dispensing device to collect a pipette tip e.g. from the storage station;
- instructing the at least one moving component to move the aspirating/dispensing device from the collecting position to the aspirating position;

- instructing the aspirating/dispensing device to aspirate the drawing volume from the primary sample container;
- instructing the at least one moving component to move the aspirating/dispensing device from the aspirating position to the dispensing position (i.e. to transfer the aspirating/dispensing device from the primary sample container to the secondary sample container);
- instructing the aspirating/dispensing device to dispense the drawing volume to the secondary sample container;
- instructing the at least one moving component to move the aspirating/dispensing device from the dispensing position to the discarding position;
- instructing the aspirating/dispensing device to discard the used pipette tip.

However, if there is an error that affects the aliquoting process, the instructing of the laboratory instrument to aliquot the drawing volume may be interrupted or suspended. Accordingly, in some cases, instructing the laboratory instrument to aliquot the drawing volume may comprise only a proper subset of instructing steps, as further discussed below.

Indeed, the method further comprises determining that an error has occurred, wherein the error affects at least one of: the laboratory instrument, a state of the biological sample, and a state of a secondary sample container configured to receive the drawing volume. Optionally, the error may affect a state of the primary sample container. Any of these errors is an error that affects the aliquoting process.

The error may occur before the aliquoting process begins or after said process has begun, in particular while the laboratory instrument is carrying out the instructions received by the processor, i.e. after the aliquoting process has started. The determination that the error has occurred may take place after the instructing starting time and before the instructing end time, in particular while the laboratory instrument is aliquoting the drawing volume. In particular, the determination takes place after the error has occurred (or at least has started occurring).

In one example, determining that an error has occurred may comprise receiving an error signal from the laboratory instrument. For instance, the laboratory instrument may detect the error, e.g. by means of one or more sensors comprised in the laboratory instrument, and send the error signal to the processor. In some cases, the method may comprise sending an inspection signal to the laboratory instrument and receiving the error signal from the laboratory instrument in response to the inspection signal. In another example, determining that an error has occurred may comprise detecting the error, e.g. by the processor.

The error may be identified as a non-compliance with positive criteria and/or as an anomaly satisfying negative criteria. In particular, the positive criteria may define a correct/normal state and/or functioning of an element (such as the laboratory instrument, the secondary sample container, the primary sample container or the biological sample) and the negative criteria may define an incorrect/abnormal state and/or functioning of an element.

Examples of errors that affect the laboratory instrument comprise but are not limited to: a user-triggered stop of the laboratory instrument, an obstruction along any paths of movement for components of the laboratory instrument (such as the aspirating/dispensing device), a malfunctioning of a component of the laboratory instrument (e.g. a moving component or a labelling component). The user-triggered stop is a controlled stop of the laboratory instrument initiated by a user, specifically a human user. After receiving the request for the user-triggered stop, there is a brief amount of time before the stop is enacted. Accordingly, the user-triggered stop sets a cut-off timepoint at which power is cut off.

Examples of errors that affect the state of the biological sample comprise but are not limited to: a clotting error, a viscosity error, a fill-level error, an incompatibility error, a centrifugation error. The clotting error indicates the presence of at least one clot (e.g. a mass of coagulated or semi-coagulated blood) in the biological sample. In other words, in particular, the clotting error is indicative of the formation of at least one clot in the biological sample. The viscosity error indicates that the liquid viscosity is above a certain threshold (too high). The fill-level error indicates that the level of the biological sample in the sample container is outside a predetermined range (too high or too low). The incompatibility error indicates that the biological material of the sample is not supported by the laboratory instrument. The centrifugation error indicates that the centrifugation state of the biological sample does not correspond to a predetermined centrifugation state.

Examples of errors that affect the state of the secondary sample container comprise but are not limited to: unavailability of the secondary sample container, defect of the secondary sample container. The unavailability of the secondary sample container may comprise the absence of the secondary sample container, e.g. due to a lack of secondary sample containers in an input area. The defect of the secondary sample container may be a defect of a feature of the secondary sample container, the feature including its opening, its wall(s), its bottom or a label supposed to be affixed to the secondary sample container. The constituent parts of the tube may e.g. be damaged, while the label may be absent, incorrectly affixed and/or incorrectly printed. The same may apply for the state of a primary sample container.

Exemplarily, the method may comprise determining that at least one error has occurred, e.g. whether a plurality of errors has occurred, such as two errors, in case more errors happen that affect the aliquoting process.

If no error occurs, the instructing of the laboratory instrument to aliquot the drawing volume may be completed, e.g. all instructed steps of the aliquoting process may be completed.

If it is determined that an error has occurred, the method may comprise interrupting the instructing of the laboratory instrument to aliquot the drawing volume. Because of the interruption, instructing the laboratory instrument to aliquot the drawing volume may comprise only a proper subset of the set of instructing steps. In other words, the sequence of instructing steps that would under normal circumstances be provided by the processor to actuate the laboratory instrument so that aliquoting can be performed may be altered when there is an error.

After determining that an error has occurred, the method further comprises selecting, based on at least one of a type of the error and a time point at which it is determined that the error has occurred, an action from a plurality of actions to be performed by the laboratory instrument.

Exemplarily, once the instructing has been suspended, i.e. the original workflow of the laboratory instrument has been disrupted, the processor decides what the laboratory instrument should do next.

The selection of the action to be performed by the laboratory instrument is based at least on a type of the error and/or a time point at which it is determined that the error has occurred. In other words, the selection of a specific action among the plurality of actions depends on the type of error and/or the time point of the determination. The selection may be based, i.e. depend, also on additional criteria, such as some of the error conditions discussed below.

There may be an association between the selection criteria, e.g. at least one of the type of error and the time point, and their corresponding actions. For instance, a relational table may associate each type of error and/or time point to a respective action. In this case, selecting the action may comprise querying the relational table using at least one of the type and the time point. In another instance, a machine learning algorithm may take the selection criteria as input and provide the selected action as output.

The type of error may refer to the nature of the error, e.g. to the specifics of the error. The time point at which it is determined that the error has occurred may be a time point relative to the aliquoting process. In particular, the time point may be not be relative to an absolute time frame (e.g. a specific hour of the day), but rather to the operations that the laboratory instrument carries out, i.e. to the phases of the aliquoting process.

There is a plurality of actions from which one action is selected. The plurality of actions comprise at least a reinsertion action. This means that there are envisioned cases for which the selected action will be the reinsertion action.

The reinsertion action comprises dispensing the drawing volume back to the primary sample container, i.e. the sample container from which the drawing volume was aspirated in the first place.

Optionally, the plurality of actions may comprise a dispensing action, which comprises dispensing the drawing volume to the secondary sample container.

The method then comprises instructing the laboratory instrument (e.g. instructing the aspirating/dispensing device) to perform the selected action. Instructing the laboratory instrument to perform the selected action may also comprise instructing the laboratory instrument to perform one or more preparatory steps for performing the selected action, such as moving the aspirating/dispensing device.

According to the method described herein, if an error that affects the aliquoting process occurs, the laboratory instrument is controlled in such a way as to reduce or eliminate waste of biological sample. In particular, volumes of biological sample (such as the drawing volume) are not just automatically discarded as a consequence of an error, but rather may be retained in the primary sample container. If the drawing volume is retained instead of discarded, it may be potentially used, e.g. for the clinical tests, so that there is no need to procure additional biological sample.

In particular, the drawing volume may be preserved if the circumstances allow it, e.g. if it can be ensured that no damage (such as contamination) will be caused by preserving the drawing volume. The discrimination among cases in which the drawing volume can be retained and cases in which it cannot be retained is based at least on the type of error and/or the time point at which it is determined that the error has occurred.

Accordingly, the selected action may be the reinsertion action if the type of error and/or the time point are such that the drawing volume can be retained without negative effects, such as contamination.

In a particular example, instructing the laboratory instrument to aliquot the drawing volume may comprise instructing the aspirating/dispensing device to aspirate the drawing volume from the primary sample container; and, if the time point at which it is determined that the error has occurred is during aspiration of the drawing volume, the selected action may be the reinsertion action.

If the determination of the error takes place during the aspiration phase, the instructing of the laboratory instrument to aliquot the drawing volume may be interrupted after instructing the aspirating/dispensing device to aspirate the drawing volume from the primary sample container.

When the time point of the determination of the error is during aspiration of the drawing volume, the drawing volume may be only partially aspirated by the dispenser, i.e. the pipette tip of the dispenser may hold only a part of the drawing volume. Accordingly, the reinsertion action may comprise dispensing at least part of the drawing volume that is in the pipette tip to the primary sample container.

For instance, the error may be a user-triggered stop. In another instance, the error may be an aspiration error. In particular, the error may be a generic aspiration error, wherein generic means that the error is not one of the following specific aspiration errors:
- cap presence on the primary sample container does not allow aspiration;
- liquid type of the biological sample does not allow aspiration;
- total volume of the biological sample in the primary sample container does not allow aspiration of the drawing volume;
- the liquid level of the biological sample in the primary sample container cannot be found;
- clotting error;
- presence of air in the biological sample.

Putting the drawing volume back into the sample container when the error has occurred during the aspiration phase is efficient, because the aspirating/dispensing device is already located at a position that allows the reinsertion.

In a particular example, the selected action may be the reinsertion action only if the error is not the clotting error. Thus, the selected action may never be the reinsertion action if the error is the clotting error. If the plurality of actions comprises the dispensing action, the selected action may also never be the dispensing action if the error is the clotting error.

The clotting error may occur at any time after the sample is collected from the subject. Namely, the clot may form at any time after the sample is collected from the subject. Exemplarily, the determination that a clotting error has occurred may take place before the aspiration phase (e.g. from images of the sample) or during the aspiration phase (e.g. by changes in the pressure curve). Determining that the clotting error has occurred may comprise determining that there is at least one clot in the biological sample.

If it is determined, before the aspiration phase, that the clotting error has occurred, the instructing of the laboratory instrument to aliquot the drawing volume may be interrupted before instructing the aspirating/dispensing device to aspirate the drawing volume from the primary sample container, e.g. after instructing the aspirating/dispensing device to collect a pipette tip from the storage station.

If it is determined, during the aspiration phase, that the clotting error has occurred, the instructing of the laboratory instrument to aliquot the drawing volume may be interrupted after instructing the aspirating/dispensing device to aspirate the drawing volume from the primary sample container.

The presence of a clot may cause splattering of the biological sample upon dispensation of the drawing volume, which may lead to contamination. Accordingly, the condition about the clotting error helps prevent contamination.

In a particular example, the method may further comprise checking whether the error is the clotting error.

Exemplarily, the plurality of actions may further comprise a discarding action, the discarding action comprising causing a pipette tip of the aspirating/dispensing device to be discarded. In particular, if the error is the clotting error, the selected action is the discarding action. More particularly, if the error is the clotting error and the occurrence of the clotting error is determined after the pipette tip has been mounted to the pipettor, the selected action is the discarding action.

Thus, the laboratory instrument may be instructed to cause the pipette tip of the aspirating/dispensing device to be discarded. Causing the pipette tip to be discarded may comprise moving, by the at least one moving component, the aspirating/dispensing device to an area to which a user can have access, so that the user removes the pipette tip. Alternatively, causing the pipette tip to be discarded may comprise moving, by the at least one moving component, the aspirating/dispensing device to the discarding position (e.g. the waste station) and discarding, by the aspirating/dispensing device, the pipette tip.

In some examples, the laboratory instrument may be instructed to cause the pipette tip of the aspirating/dispensing device to be discarded only if at least part of the drawing volume has been aspirated by the aspirating/dispensing device. For instance, this may be the case if it is determined during the aspiration phase that the clotting error has occurred. Thus, the discarded pipette tip may contain at least part of the drawing volume.

In other examples, the laboratory instrument may be instructed to cause the pipette tip of the aspirating/dispensing device to be discarded also if the pipette tip is still empty. For instance, this may be the case if it is determined before the aspiration phase that the clotting error has occurred.

Causing the pipette tip to be discarded reduces or eliminates the risk of contamination.

As mentioned, the plurality of actions may comprise the dispensing action. In a particular example, if the time point at which it is determined that the error has occurred is during transfer of the aspirating/dispensing device from the aspirating position to the dispensing position, the method may further comprise checking whether a first error condition is satisfied;
wherein:
if the first error condition is satisfied, the selected action may be the reinsertion action;
if the first error condition is not satisfied, the selected action may be the dispensing action; and
the first error condition is a condition that the error is indicative of at least one of (a) unavailability of the secondary sample container, (b) defect of the secondary sample container, (c) unreachability of the secondary sample container.

If the determination of the error takes place during the transfer phase, the instructing of the laboratory instrument to aliquot the drawing volume may be interrupted after instructing the moving component(s) of the laboratory instrument to transfer the aspirating/dispensing device from the primary sample container to the secondary sample container. Thus, instructing the laboratory instrument to aliquot the drawing volume may comprise instructing the aspirating/dispensing device to aspirate the drawing volume from the primary sample container and instructing the moving component(s) of the laboratory instrument to transfer the aspirating/dispensing device from the primary sample container to the secondary sample container.

In this particular example, the selection of the action is based both on the type of error (as expressed by the first error condition) and on the time point at which the determination takes place.

The first error condition requires that the error is indicative of at least one of (a) unavailability of the secondary sample container, (b) defect of the secondary sample container, (c) unreachability of the secondary sample container.

As explained above, the occurrence of an error indicative of unavailability may be the absence of the secondary sample container. In particular, the secondary sample container may have a designated location within the laboratory instrument that can be reached by the aspirating/dispensing device for dispensing. For instance, the secondary sample container may be brought by a gripper from an input area. If the input area is empty, the gripper may not find any secondary sample container to move to the designated location. In another case, the gripper may be malfunctioning.

The defect of the secondary sample container may be a defect of a feature of the secondary sample container, in particular of a label that should be affixed to the secondary sample container, which may be absent, incorrectly affixed and/or incorrectly printed. For example, the label may not be completely affixed, the position and/or orientation of the label on secondary sample container may not satisfy some predetermined criteria, there may be ridges and/or tears in the affixed label, the print on the label may not have been printed correctly, e.g. it may have smudges.

The secondary sample container may be present but unreachable, e.g. there may be an obstruction along the path between the aspirating position and the dispensing position. For instance, a device adjacent to the laboratory instrument may malfunction and block the path.

Any of the error types in the first error condition may be detected by means of one or more sensors, e.g. cameras, weight sensors, pressure sensors, and processing of the sensor data.

If the type of error falls under one of the categories of the first error condition and if it is determined during the transfer phase that such an error has occurred, the laboratory instrument may be instructed to perform the reinsertion action. In particular, the moving component(s) may be instructed to move the aspirating/dispensing device back to the aspirating position and the aspirating/dispensing device may be instructed to dispense the drawing volume back into the primary sample container. Accordingly, despite an error that prevents the completion of the original aliquoting process (according to which the drawing volume is to be dispensed to the secondary sample container), the drawing volume is not discarded but is retained in the primary sample container.

If the type of error does not fall under one of the categories of the first error condition and if it is determined during the transfer phase that such an error has occurred, the laboratory instrument may be instructed to perform the dispensing action. In particular, the moving component(s) may be instructed to move the aspirating/dispensing device all the way to the dispensing position and the aspirating/dispensing device may be instructed to dispense the drawing volume into the secondary sample container. Accordingly, despite the occurrence of an error, since it does not prevent the completion of the original aliquoting process (according to which the drawing volume is to be dispensed to the secondary sample container), the drawing volume is nonetheless dispensed into the secondary sample container instead of being discarded.

Hence, sample waste is avoided and the retention of the drawing volume is effectively performed.

In a particular example, if the time point is during transfer of the aspirating/dispensing device, the method may further comprise:
- checking whether the error is a user-triggered stop of the laboratory instrument, wherein the user-triggered stop sets a cut-off timepoint at which power is cut off (e.g. to the at least one moving component of the laboratory instrument); and
   if the error is the user-triggered stop, the method may further comprise:
      - determining a first distance between the aspirating/dispensing device and the primary sample container;
      - determining a second distance between the aspirating/dispensing device and the secondary sample container; and
      - checking whether a second error condition is satisfied;
   wherein:
      if the second error condition is satisfied, the selected action may be the reinsertion action;
      if the second error condition is not satisfied, the selected action may be the dispensing action; and
      the second error condition is a condition that the second distance is greater than the first distance or is a condition that the second distance is greater than or equal to the first distance.

If the determination of the error takes place during the transfer phase, the instructing of the laboratory instrument to aliquot the drawing volume may be interrupted after instructing the moving component(s) of the laboratory instrument to transfer the aspirating/dispensing device from the primary sample container to the secondary sample container. Thus, instructing the laboratory instrument to aliquot the drawing volume may comprise instructing the aspirating/dispensing device to aspirate the drawing volume from the primary sample container and instructing the moving component(s) of the laboratory instrument to transfer the aspirating/dispensing device from the primary sample container to the secondary sample container.

In this particular example, the selection of the action is based on the type of error (user-triggered stop), on the time point at which the determination takes place, and on the second error condition.

As discussed above, the user-triggered stop is a controlled stop of the laboratory instrument initiated by a user. In particular, the controlled stop may lead to cutting off power to the laboratory instrument and the user-triggered stop sets a cut-off timepoint at which power is cut off. The time interval between receiving the request for the user-triggered stop and shutting power off may be e.g. between 2 and 6 s, such as 4 s. In particular, the time interval may be equal to or greater than the time interval that is needed to move the aspirating/dispensing device from the aspirating position to the dispensing position.

Specifically, power may be cut off only for some components of the laboratory instrument, such as components that are considered dangerous for the user. Exemplarily, the user-triggered stop may cause only the one or more moving components of the laboratory instrument to stop. A labelling component comprised in the laboratory instrument may also be affected by the user-triggered stop. Mechanical elements for aspirating/dispensing the fluid comprised in the pipettor, such as a pump, may not be affected by the user-triggered stop.

Determining the first and second distance between the aspirating/dispensing device and the sample containers may comprise computing the separation between a current location of the aspirating/dispensing device and the location of the sample containers. The location of the sample containers may be constant within the laboratory instrument, in the sense that all primary sample containers may be brought to a primary location for the purpose of aspiration and all secondary sample containers may be brought to a secondary location for the purpose of dispensation. The primary and secondary location may be stored in a memory. The current location of the aspirating/dispensing device may be known because the respective location of the moving component that moves the aspirating/dispensing device from the primary sample container to the secondary sample container is known, since it is controlled by the processor. Additionally or alternatively, determining the first and second distance between the aspirating/dispensing device and the sample containers may comprise receiving data from one or more sensors.

Checking whether the second error condition is satisfied comprises comparing the first distance with the second distance. If the second error condition is satisfied, the second distance is greater than the first distance, i.e. the primary sample container is closer than the secondary sample container to the aspirating/dispensing device. Thus, the movement of the aspirating/dispensing device may be reversed so that it is brought back to the primary sample container and the drawing volume may be dispensed into the primary sample container.

If the second error condition is not satisfied, the first distance is greater than or equal to the second distance, i.e. the secondary sample container is closer than the primary sample container to aspirating/dispensing device or they are equidistant. Thus, the movement of the aspirating/dispensing device toward the secondary sample container may be completed and the drawing volume may be dispensed into the secondary sample container.

If the user triggers the stop during the transfer phase, so that the determination of the error takes place during the transfer phase, the aspirating/dispensing device may be in between the primary sample container and the secondary sample container. According to this particular example, the closest sample container is chosen as the sample container into which the drawing volume shall be dispensed. Hence, sample waste is avoided and the retention of the drawing volume is efficiently performed.

In some cases, there may be a hierarchy of priorities between the error conditions. Exemplarily, the first error condition may have priority over the second error condition.

In one example, the priority may mean that the first error condition supersedes the second error condition. Accordingly, if both the first error condition and the second error condition are checked and the selected action on the basis of the first error condition is different from the selected action on the basis of the second error condition, the selected action is the one selected on the basis of the first error condition.

As mentioned above, more than one error may occur that affects the aliquoting process. For instance, a user may trigger the user-triggered stop during the transport phase and the determination of the occurrence of the user-triggered stop may be also during the transport phase. The aspirating/dispensing device may be closer to the secondary sample container, so that the selected action should be the dispensing action, based on the second error condition.

However, it may also be determined that the secondary sample container is defective, e.g. that the label is incorrectly affixed. Based on the first error condition, the selected action should be the reinsertion action. In virtue of the priority of the first error condition, the selected action is the reinsertion action and not the dispensing action.

In another example, the priority may mean that the second error condition may be checked after the first error condition, in particular may only be checked if the first error condition is not satisfied. If the second error condition is also not satisfied, the selected action is the dispensing action. If, instead, the second error condition is satisfied, the selected action is the reinsertion action.

In a particular example, the method may further comprise, providing recovery information to a user. This may be done after instructing the laboratory instrument to perform the selected action, in particular after the laboratory instrument has performed the selected action.

The recovery information may be provided via an output unit, such as a screen and/or a speaker, wherein the output unit is connected to the processor. The output unit may or may not be a part of the laboratory instrument.

The recovery information is indicative of one or more steps to be taken by the user, e.g. to address the error. The recovery information may be based on the type of error and/or on the time point of determination of the error and/or on the selected action.

For example, in case the error is the user-triggered stop, the recovery information may indicate steps to be carried out by the user to enable a re-start of the laboratory instrument. In this example, the steps may comprise removing the pipette tip (if there is a pipette tip mounted, and if there is part of the drawing volume in it) and removing a secondary sample container from a labelling component of the laboratory instrument (if there is a secondary sample container in the labelling component).

For example, in case the error is the clotting error, the recovery information may indicate that the pipette tip should be removed by the user, as mentioned above.

Providing recovery information to the user leads to efficiently addressing the error.

Exemplarily, the method may further comprise, after instructing the laboratory instrument to perform the selected action, instructing the laboratory instrument to perform one or more operations. In particular, the processor may determine one or more operations that the laboratory instrument should carry out based on the type of error and/or on the time point of determination of the error and/or on the selected action.

In a particular example, the method may further comprise instructing the laboratory instrument to prepare one or more additional secondary sample containers, e.g. after instructing the laboratory instrument to perform the selected action.

Instructing the laboratory instrument to prepare an additional secondary sample container may comprise instructing the laboratory instrument to take the additional secondary sample container from e.g. an input area and bring it to a labelling component, and to label the additional secondary sample container.

For instance, if the error affects the state of the secondary sample container, e.g. there is a defect, one additional secondary sample container may be prepared as replacement.

In some cases, as mentioned above, the drawing volume may have to be distributed among a plurality of secondary sample containers. If the error affects the laboratory instrument, the error may have prevented the preparation of at least some of the plurality of secondary sample containers. Exemplarily, after determining that the error has been addressed, the additional secondary sample containers may be prepared. For instance, the error may be the user-triggered stop and the laboratory instrument may be instructed to prepare one or more additional secondary sample containers after re-start of the laboratory instrument.

In a particular example, the method may further comprise causing the sample container containing the drawing volume to be routed to an error area, after instructing the laboratory instrument to perform the selected action. For example, causing the sample container containing the drawing volume to be routed to an error area comprises instructing the laboratory instrument to route the sample container containing the drawing volume to the error area.

The sample container containing the drawing volume may be the primary sample container or the secondary sample container, depending on which action is selected on the basis of the error type and/or the time point of determination.

The error area may be a physically delimited portion of space configured to receive and support sample containers. For instance, the error area may comprise receptacles for sample containers, such as racks. Sample containers located at the error area may be assessed by users to decide e.g. whether they can be further processed or should be eliminated.

Exemplarily, causing the sample container containing the drawing volume to be routed to the error area may comprise setting at least one flag associated with the sample container containing the drawing volume. The flag may e.g. be stored in a database. The flag may comprise information indicative of the occurrence of an error (e.g. a Boolean flag) and/or information indicative of which error occurred. Setting the at least one flag may reliably and permanently mark the sample container and, thus, the drawing volume as possibly compromised. Accordingly, the error may not be overlooked even at later stages.

In some examples, causing the sample container containing the drawing volume to be routed to an error area may comprise instructing the laboratory instrument to move said sample container to the error area, e.g. by means of a gripper and/or transportation means of the laboratory instrument. In other examples, causing the sample container containing the drawing volume to be routed to an error area may comprise instructing the laboratory instrument to move (e.g. by means of a gripper) said sample container to an area to which a human user can have access and providing information (e.g. via an output unit) to the human user to bring said sample container to the error area.

In the case of a user-triggered stop, the step of causing the sample container to be routed to an error area may be performed after re-start of the laboratory instrument.

Exemplarily, beyond the sample container containing the drawing volume, i.e. the primary sample container or the secondary sample container, also the other sample container (i.e. the secondary sample container or the primary sample container, respectively) may be routed to the error area. Furthermore, also the additional secondary sample containers discussed above may be routed to the error area.

Causing the sample container containing the drawing volume (and optionally other sample containers as well) to be routed to an error area may ensure a correct handling of the drawing volume of biological sample. In particular, since the occurred error may have negative effects on the drawing volume (such as contamination or alteration), the retained drawing volume is sent to an error area before potentially being further processed. A user has the possibility of evaluating how to proceed further once the sample container is at the error area.

In a particular example, the method may further comprise:
- checking whether at least one third error condition of a set of third error conditions is satisfied; and
if no third error condition is satisfied, the method may further comprise:
causing the sample container containing the drawing volume to be routed to an error area.

Accordingly, causing the sample container to be routed to the error area, as discussed above, may be made contingent on at least one third error condition. In other words, cases may be envisioned in which, even if it is determined that an error has occurred, the sample container may not be routed to the error area.

The set of third error conditions may comprise one or more third error conditions. Only if none of the third error conditions is met, the method may further comprise causing the sample container containing the drawing volume to be routed to the error area. If one or more third error conditions are met, the method may not comprise causing the sample container containing the drawing volume to be routed to the error area.

The third error conditions may be conditions that determine whether it is needed/recommendable to route the sample container to the error area, e.g. to let a user decide what to do with the drawing volume in light of the occurred error, or not. Thus, in this particular example, the handling of the biological sample may be made efficient and safe at the same time, by discriminating cases in which to send the sample container to the error area from cases in which the sample container may be directly further processed, e.g. within the laboratory instrument or by other laboratory instruments such as analysers.

Indeed, in some examples, if at least one third error condition is satisfied, the method may further comprise causing the sample container containing the drawing volume to be routed to a processing area. Accordingly, the fact that at least one third error condition is satisfied may indicate that the drawing volume was not affected by the error in such a manner that further processing of the drawing volume (e.g. for a clinical test) is made impossible or invalid.

The processing area may be an area of an automated laboratory system to which the laboratory instrument belongs. In particular, the processing area may comprise one or more analysers and/or other instruments, such as a recapper.

Exemplarily, a third error condition may be a condition that the error is a predetermined error, e.g. of a set of predetermined errors. There may be one or more predetermined errors, e.g. stored in a database. If the error that occurred is one of these specific errors, the third error condition is satisfied.

For instance, the set of predetermined errors may comprise an error indicative of unavailability of the secondary sample container, an error indicative of a defect of the secondary sample container, an error indicative of unreachability of the secondary sample container. A clotting error is not a predetermined error.

Exemplarily, a third error condition may be a condition that a test to be carried out on the biological sample is a predetermined test, e.g. of a set of predetermined tests. A predetermined test may be any clinical test that is not platelet-sensitive nor hemolysis-sensitive, i.e. a clinical test whose result is not affected by hemolysis or by characteristics of the platelets.

Exemplarily, a third error condition may be a condition that a dispensing speed of the aspirating/dispensing device is equal to or lower than a predetermined value, e.g. about 50 µl/s, or more particularly 30 µl/s, or even more particularly 10 µl/s. In particular, if the dispensing speed satisfies this condition, resuspension of the biological sample upon reinsertion of the drawing volume may be avoided.

A second aspect of the present invention relates to a laboratory instrument. The laboratory instrument comprises an aspirating/dispensing device configured to aspirate and dispense a drawing volume of a biological sample; and at least one processor configured to carry out the method according to first aspect of the present invention. In particular, the laboratory instrument is the laboratory instrument described herein when discussing the first aspect of the present invention. Indeed, all the features and facets of the method pertain to the laboratory instrument and vice versa.

Exemplarily, the laboratory instrument may further comprise at least one memory connected to the at least one processor. The laboratory instrument may comprise a computing device comprising the at least one processor and the at least one memory. Furthermore, the laboratory instrument may comprise at least one moving component configured to move the aspirating/dispensing device.

In some examples, the laboratory instrument may comprise at least one of the following:
- a storage station configured to contain a plurality of new pipette tips;
- a waste station configured to contain a plurality of used pipette tips;
- a gripper configured to move sample containers (in particular secondary sample containers) within the laboratory instrument and, optionally, in and/or out of the laboratory instrument;
- a labelling component configured to label secondary sample containers;
- an input area configured to store secondary sample container.

A third aspect of the present invention relates to an automated laboratory system. The automated laboratory system comprises: the laboratory instrument according to the first aspect; and the error area discussed above. The automated laboratory system may further comprise a processing area, as described above; in particular, the automated laboratory system may comprise one or more analysers in the processing area.

According to a fourth aspect of the invention, a computer program product is provided. The computer program product comprising instructions which, when the program is executed by a computer, cause the computer to carry out the method according to first aspect of the present invention.

A fifth aspect of the present invention refers to a computer-readable medium, e.g. a transitory computer readable medium comprising instructions which, when executed by a computer, cause the computer to carry out the method according to first aspect of the present invention.

### Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.
Figure 1 shows a block diagram of an exemplary automated laboratory system.
Figure 2 shows a schematic representation of an exemplary laboratory instrument.
Figure 3 shows an exemplary timeline of an aliquoting process.
Figure 4 shows a flow chart of an exemplary method.
Figure 5 shows a flow chart of an exemplary selection of an action in the method of figure 4.
Figure 6 shows a flow chart of an exemplary continuation of the method of figure 4.
Figure 7 shows a decision tree for selecting, based on time interval within which the determination of a user-triggered stop occurs, the action that the laboratory instrument shall perform.

### Detailed Description

In the following, a detailed description of examples will be given with reference to the drawings. It should be understood that various modifications to the examples may be made. Unless explicitly indicated otherwise, elements of one example may be combined and used in other examples to form new examples.

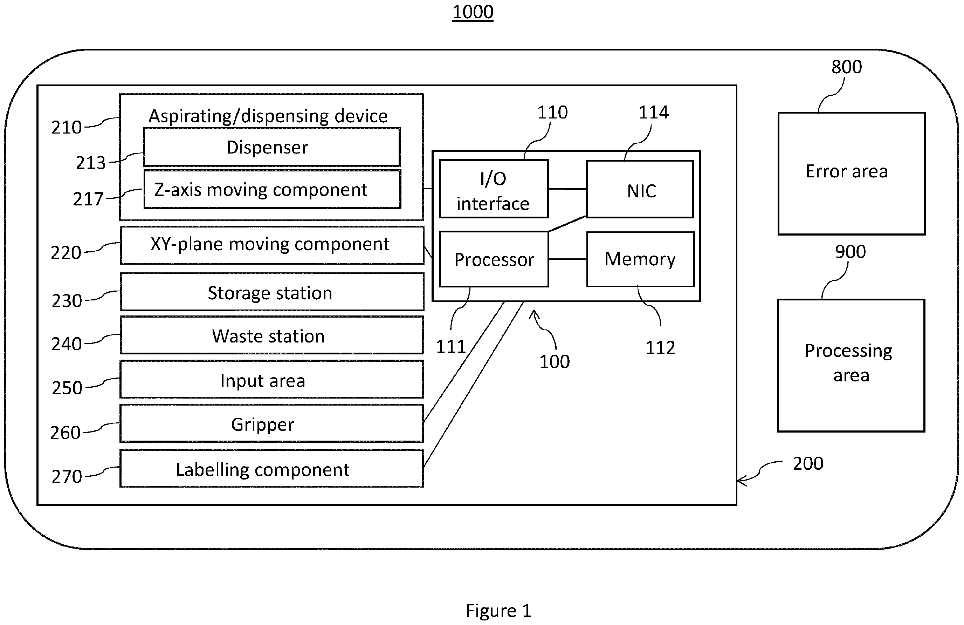

**Figure 1** shows a block diagram of an exemplary automated laboratory system 1000. comprising a laboratory instrument 200.

The laboratory instrument 200 comprises a computing device 100. Exemplarily, the computing device 100 comprises a processor 111 (e.g. a CPU, a GPU, or the like), and a memory 112. The memory 112 may comprise a primary memory and a secondary memory (not shown). The computing device 100 may also comprise an input output (I/O) interface 110 for communicating with input/output units, such as a screen, a keyboard, a touch screen, a printer, or the like.

Furthermore, the computing device 100 may comprise a Network Interface Controller (NIC) 114 configured to connect said device with one or more networks (e.g. an intranet, the internet, a cellular network, or the like). In other examples, the computing device may comprise a plurality of NICs.

In the example shown in Figure 1, the computing device 100 is physically part of the laboratory instrument 200 and may be e.g. located within the laboratory instrument 200. The data communication between the computing device 100 and the other components of the laboratory instrument 200 may occur via a bus or via an internal network.

In another (not shown) example, the computing device 100 may be external to the laboratory instrument 200. In this example, the computing device 100 may be physically distinct from the laboratory instrument 200 and may be e.g. located remotely from the laboratory instrument 200.

The laboratory instrument 200 further comprises an aspirating/dispensing device 210, which comprises a dispenser 213 and a moving component 217 configured to move the dispenser 213 along a vertical axis, denoted as z axis. The aspirating/dispensing device 210 is configured to perform aliquoting of volumes of biological samples. The dispenser 213 aspirates, holds and dispenses liquid.

Exemplarily, the dispenser 213 may comprise a pipettor. The pipettor comprises a pump for aspirating/dispensing the liquid and holds a pipette tip. The pipette tip is disposable and is releasably mounted to the pipettor. Accordingly, at different moments in time, the pipette tip mounted to the pipettor may vary.

In use, the z-axis moving component 217 moves the dispenser 213 downwards and upwards, in particular in and out of tubes. In particular, for aspiration, the z-axis moving component 217 brings at least a portion of the pipette tip inside the tube and below the liquid level of a biological sample contained in the tube. For dispensation, the z-axis moving component 217 brings at least a portion of the pipette inside the tube.

The laboratory instrument 200 further comprises a moving component 220 configured, in use, to move the aspirating/dispensing device 210 in the horizontal plane, denoted as *x-y* plane, such as an *x-y* gantry. In particular, the *x-y* plane moving component 220 moves the aspirating/dispensing device 210 from a primary tube containing biological sample from which a drawing volume must be taken to a secondary tube to which the drawing volume should be dispensed.

The laboratory instrument 200 further comprises a storage station 230 configured to contain a plurality of new pipette tips and a waste station 240 configured to contain a plurality of used pipette tips. The storage station 230 is accessible to the aspirating/dispensing device 210 for collecting clean pipette tips and the waste station 240 is accessible to the aspirating/dispensing device 210 for discarding used pipette tips. The *x-y* plane moving component 220 moves the aspirating/dispensing device 210 to and from the storage and waste stations.

The laboratory instrument 200 further comprises an input area 250 configured to accommodate a plurality of secondary tubes. The input area 250 may be accessible to a user to load secondary tubes in the laboratory instrument 200. Thus, the input area 250 may be configured to receive and support a plurality of secondary tubes. Exemplarily, the input area 250 may be configured to receive and accommodate racks holding secondary tubes. A rack is configured to receive and to hold a plurality of secondary tubes.

The laboratory instrument 200 further comprises a gripper 260 configured to move tubes, for example secondary tubes from the input area 250. In particular, the gripper 260 moves one tube at the time. The gripper 260 is configured to grip a tube, namely grasp the tube such that it is held fast and is co-movable with the gripper 260, and to release the tube, namely to free it from its grasp and allow a physical separation between the gripper 260 and the tube. For instance, the gripper 260 may be configured to hold an upper portion of a tube. The gripper 260 is configured to grip/release one tube at the time. The gripper 260 comprises a drive mechanism that allows it to move within the three-dimensional space. The drive mechanism may be similar to the moving components 217 and 220.

The laboratory instrument 200 further comprises a labelling component 270 configured to label secondary tubes. In particular, the labelling component 270 may be configured to affix a label to a secondary tube before the dispenser dispenses the drawing volume in it, for instance also before the dispenser aspirates the drawing volume from the primary tube. The label contains information about the secondary tube printed on it. Said information may be comprised in a barcode displayed on the label affixed on the secondary tube. The labelling component 270 may also comprise means for printing on the label.

Exemplarily, the aspirating/dispensing device 210, the *x-y* plane moving component 220, the gripper 260 and the labelling component 270 are controlled by the computing device 100.

The laboratory instrument 200 may further comprise other components not shown in figure 1.

The automated laboratory system 1000 further comprises an error area 800 and a processing area 900. The error area 800 is a physically delimited portion of space configured to receive and support tubes. For instance, the error area 800 may comprise racks. A tube may be transferred from the laboratory instrument 200 to the error area 800 automatically, e.g. by the gripper 260 and/or by other transportation means such as a conveyor. The error area 800 may be a transitional area where tubes that may possibly have been compromised by errors are brought, to enable a user to decide how to handle these tubes, e.g. whether they can be further processed or should be eliminated. The processing area 900 is the part of the automated laboratory system 1000 where the analysers configured to carry out the clinical tests are located.

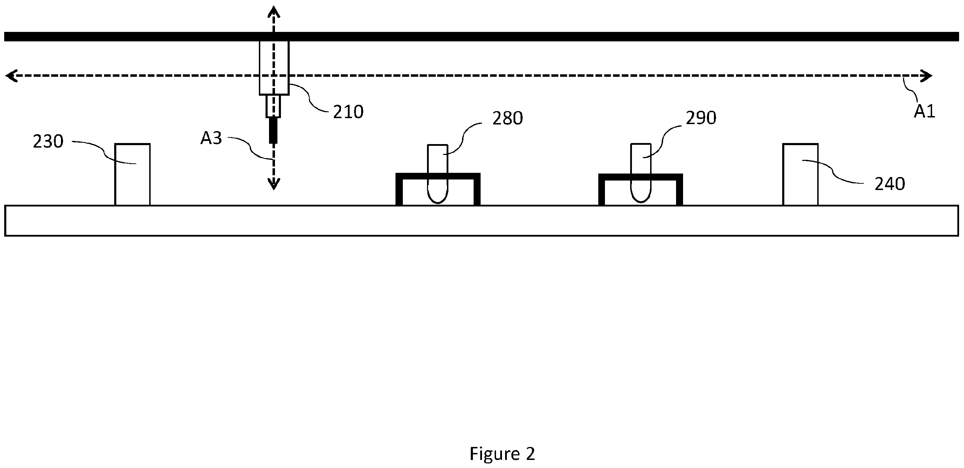

**Figure 2** shows a schematic representation of some components of the laboratory instrument 200. In particular, the aspirating/dispensing device 210 is shown, together with the storage station 230 and the waste station 240. The axis A1 is one of the two orthogonal axes in the horizontal plane, i.e. the *x* axis or the *y* axis, while axis A3 is the vertical axis, namely the *z* axis. Figure 2 further shows a primary tube 280 and a secondary tube 290. Each tube may be supported by a holder, as shown. A holder is configured to hold the tube in an upright position.

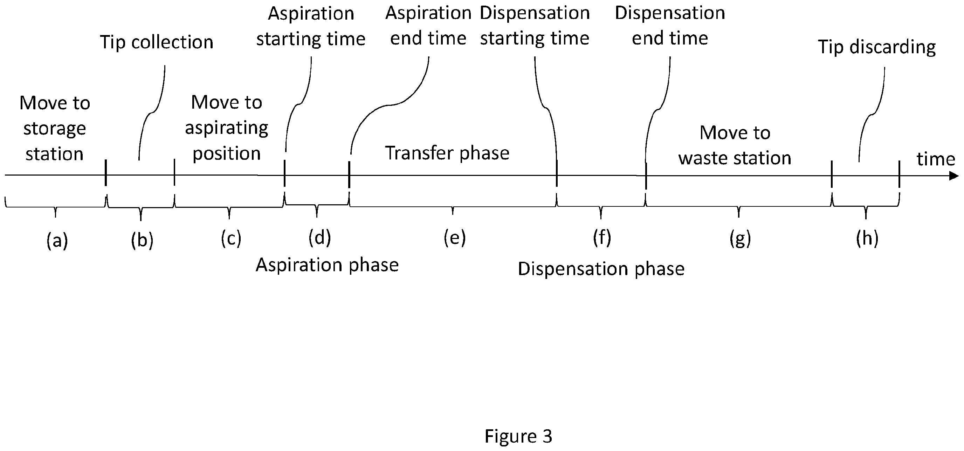

An exemplary aliquoting process will be described with reference to figures 2 and 3. For the sake of simplicity, figure 2 shows the stations 230, 240 and the tubes 280, 290 all on the same surface and in a spatial sequence along the A1 axis in which the storage station 230 is followed by the primary tube 280, which is followed by the secondary tube 290 and finally there is the waste station 240. However, it is noted that this spatial arrangement is merely an illustrative example. In particular, the stations 230, 240 and the tubes 280, 290 need not be arranged all on the same surface. Furthermore, the relative positions of these elements may differ from the one in the figure. For instance, the aspirating/dispensing device 210 may move back and forth along the A1 axis and/or the other horizontal axis perpendicular to it (not shown) to go from one location to the other. Exemplarily, for aspiration, the primary tube 280 may be located on a conveyor external to the laboratory instrument 200 but within reach of the aspirating/dispensing device 210, while, for dispensation, the secondary tube 290 may be located within the labelling component 270 of the laboratory instrument 200.

**Figure 3** shows an exemplary timeline of a complete aliquoting process. The size of the segments on the time axis is not to scale.

The aspirating/dispensing device 210 may be in an initial position, e.g. an idle position or above the waste station 240, if a previous aliquoting process has just been completed. If the initial position is not already at the storage station 230, a first phase (a) of the aliquoting process is moving, by the *x-y* plane moving component 220, the aspirating/dispensing device 210 to the storage station 230, in particular above the storage station 230.

The second phase (b) is collecting, by the aspirating/dispensing device 210, a clean pipette tip from the storage station 230. The pipette tip is mounted to the pipettor. In order to perform the collecting, the z-axis moving component 217 may move the dispenser downwards and then upwards along the A3 axis.

The third phase (c) is moving, by the *x-y* plane moving component 220 and the z-axis moving component 217, the aspirating/dispensing device 210 from the storage station 230 to the aspirating position within the primary tube 280. In particular, the *x-y* plane moving component 220 moves the aspirating/dispensing device 210 to a position above the primary tube 280 and the z-axis moving component 217 moves at least a portion of the pipette tip inside the primary tube 280, in particular below the liquid level of the biological sample contained in the primary tube 280.

The fourth phase (d) is the aspiration phase. The aspirating/dispensing device 210 aspirates the drawing volume by means of the pump in the pipettor, so that the drawing volume is displaced from the primary tube 280 into the pipette tip.

The fifth phase (e) is the transfer phase, during which the *x-y* plane moving component 220 and the z-axis moving component 217 move the aspirating/dispensing device 210 from the aspirating position within the primary tube 280 to the dispensing position within the secondary tube 290. In particular, the *z*-axis moving component 217 moves the whole pipette tip out of the primary tube 280, the *x-y* plane moving component 220 moves the aspirating/dispensing device 210 to a position above the secondary tube 290 and the z-axis moving component 217 moves at least a portion of the pipette tip inside the secondary tube 290.

The sixth phase (f) is the dispensation phase. The aspirating/dispensing device 210 dispenses the drawing volume by means of the pump in the pipettor, so that the drawing volume is released from the pipette tip into the secondary tube 290.

The seventh phase (g) is moving, by the *x-y* plane moving component 220 and the *z-*axis moving component 217, the aspirating/dispensing device 210 from the dispensing position within the secondary tube 290 to the waste station. In particular, the *z*-axis moving component 217 moves the whole pipette tip out of the secondary tube 290 and the *x-y* plane moving component 220 moves the aspirating/dispensing device 210 to a position above the waste station 240.

The eighth phase (h) is discarding, by the aspirating/dispensing device 210, the used pipette tip into the waste station 240. The pipette tip is unmounted from the pipettor. In order to perform the discarding, the z-axis moving component 217 may move the dispenser downwards and then upwards along the A3 axis.

After the aliquoting process is completed, the computing device 100 may cause the drawing volume contained in the secondary tube 290 to be routed to the processing area 900. In particular, the computing device 100 may instruct the laboratory instrument 200, e.g. the gripper 260, to move the secondary tube 290 out of the laboratory instrument 200 and to the processing area 900.

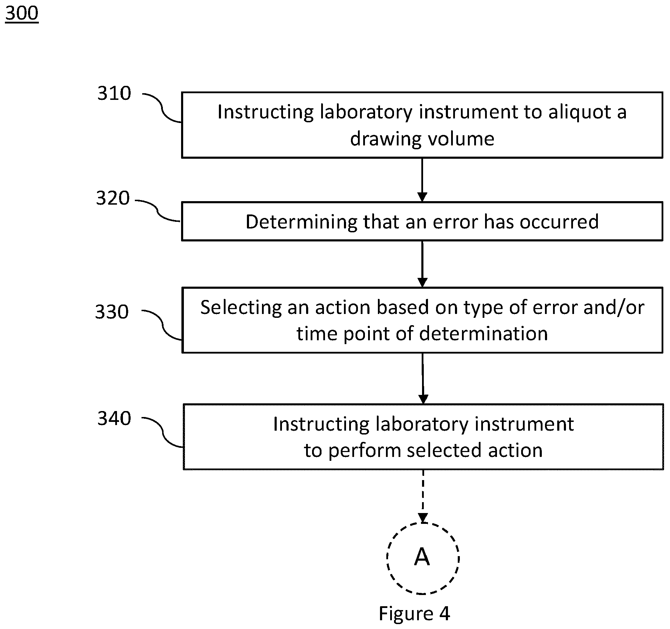

**Figure 4** shows a flow chart of an exemplary method 300, in particular for dealing with errors that may disrupt the aliquoting process. The dashed lines indicate steps of the method that may or may not be performed.

The method 300 comprises, at 310, instructing, by the computing device 100, the laboratory instrument 200 to aliquot a drawing volume, i.e. to carry out an aliquoting process, e.g. as the one described with reference to figures 2 and 3.

While the laboratory instrument 200 carries out the aliquoting process, it is determined, by the computing device 100, at 320 that an error has occurred that affects the aliquoting process, in particular an error that affects at least one of: the laboratory instrument 200, a state of the biological sample in the primary tube 280, and a state of the secondary tube 290.

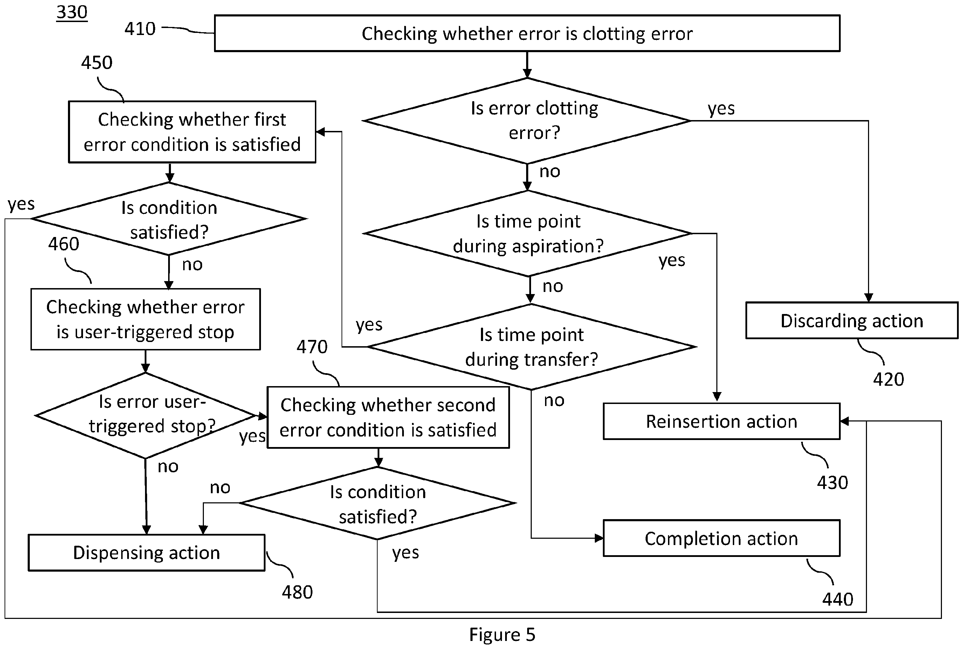

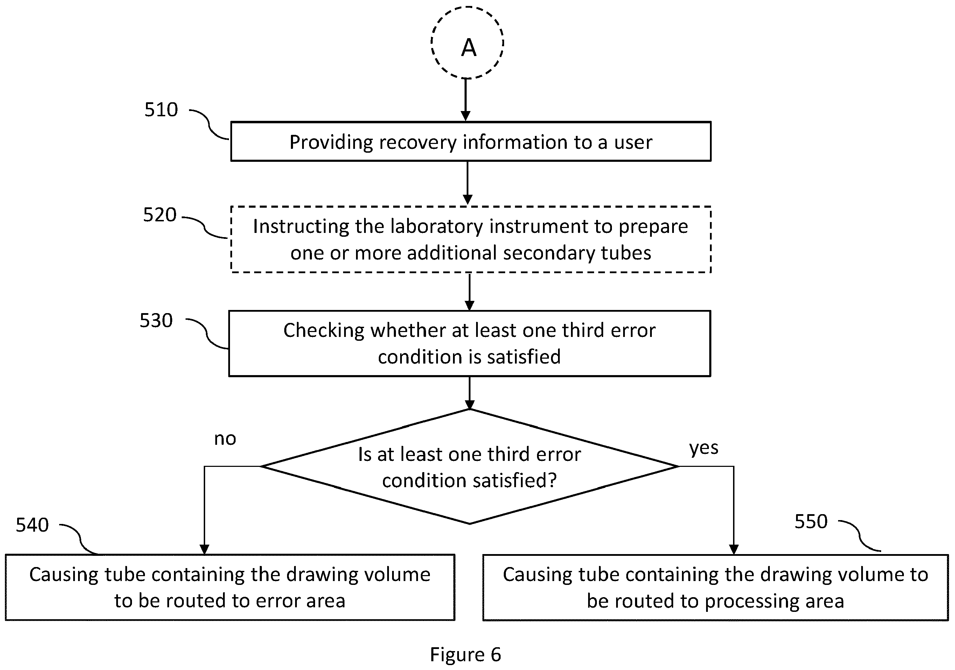

The method 300 further comprises at 330 selecting, by the computing device 100, an action from a plurality of actions, wherein the selection is based on the type of error that has occurred and/or on the time point at which it has been determined that an error had occurred. Details about the selection will be discussed with reference to figure 5 below. Then, the computing device 100 instructs at 340 the laboratory instrument 200 to perform the selected action. After instructing the laboratory instrument 200 to perform the selected action, the computing device 100 may carry out further steps, which will be discussed with reference to figure 6 below.

**Figure 5** shows a flow chart of an exemplary selection of an action according to step 330 above. In the example shown in figure 5, the plurality of actions among which the action is selected comprise a discarding action 420, a reinsertion action 430, a dispensing action 480 and a completion action 440.

The discarding action 420 comprises causing the pipette tip of the aspirating/dispensing device 210 to be discarded. Causing the pipette tip to be discarded may comprise moving, by the *x-y* plane moving component 220, the aspirating/dispensing device 210 to an area to which a user can have access, so that the user removes the pipette tip. Alternatively, causing the pipette tip to be discarded may comprise moving, by the *x-y* plane moving component 220, the aspirating/dispensing device to the waste station 240.

The reinsertion action 430 comprises dispensing, by the aspirating/dispensing device 210, the drawing volume back into the primary tube 280 from which it was aspirated in the first place. In particular, when performing the reinsertion action 430, the z-axis moving component 217 may move the pipette tip to a reinsertion position, which is above the liquid level of the biological sample that was left in the primary tube 280 but below the opening (i.e. below the rim) of the primary tube 280, so as to avoid spilling.

The dispensing action 480 comprises dispensing, by the aspirating/dispensing device 210, the drawing volume into the secondary tube 290, as done during the dispensation phase.

The completion action 440 comprises completing, by the laboratory instrument 200, the operation it is carrying out at the time point of determination of the error, and, optionally, carrying out subsequent operations of the aliquoting process.

In particular, determining the selected action comprises checking at 410, by the computing device 100, whether the error that has occurred is the clotting error, wherein the clotting error indicates the formation of at least one clot in the biological sample. If there is a clot in the biological sample, the selected action is the discarding action 420.

If the error is not the clotting error, the time point of the determination of the error is taken in consideration. If the time point is during the aspiration phase (d), the selected action is the reinsertion action 430.

If the time point is neither during the aspiration phase (d) nor during the transfer phase (e), the selected action is the completion action 440.

If the time point is during the transfer phase (e), the computing device 100 checks at 450 whether a first error condition is satisfied. The first error condition requires that the error be indicative of at least one of (a) unavailability of the secondary sample container, (b) defect of the secondary sample container, (c) unreachability of the secondary sample container. If the first error condition is satisfied, the drawing volume cannot be dispensed into the secondary tube 290. Thus, the selected action is the reinsertion action 430.

If the first error condition is not satisfied, the computing device 100 checks at 460 whether the error is a user-triggered stop. The user-triggered stop makes the laboratory instrument 200 maintain full power for four seconds and then the power is discontinued to all components that are considered dangerous for a user. The *x-y* plane moving component 220 and the z-axis moving component 217 are cut off by the user-triggered stop. The pump in the pipettor is not cut off by the user-triggered stop.

If the error is not the user-triggered stop, the selected action is the dispensing action 480. If the error is the user-triggered stop, the computing device 100 checks at 470 whether a second error condition is satisfied. Exemplarily, the second error condition requires that the aspirating/dispensing device 210 be in a position more distant from the secondary tube 290 than from the primary tube 280. If the second error condition is satisfied, the selected action is the reinsertion action 430, otherwise the selected action is the dispensing action 480.

The steps shown in Figure 5 and their sequence merely constitute an example of how the selection may be made. Some steps may be optional, some steps may be carried out in parallel, some steps may be re-arranged in a different sequence. Furthermore, additional steps may be carried out. For example, the computing device 100 may check whether the error is an error that prevents the aspirating/dispensing device 210 from moving, in which case the selected action may be a waiting action, i.e. leaving the aspirating/dispensing device 210 where it is and waiting for the error to be addressed.

**Figure 6** shows a flow chart of an exemplary continuation of the method of figure 4. After instructing the laboratory instrument 200 to perform the selected action at 340, the computing device 100 provides at 510 recovery information to a user via the I/O interface 110, e.g. by displaying the recovery information on a screen. The recovery information indicates one or more steps to be taken by the user, for example in order to bring the laboratory instrument 200 to a state in which it can function normally.

After providing the recovery information and, possibly, after the user has taken the steps indicated in the recovery information, it may be determined whether it is needed to prepare one or more additional secondary sample containers. If this is the case, the computing device 100 instructs, at step 520, the laboratory instrument 200 to prepare one or more additional secondary tubes.

If the error concerned the state of the secondary tube 290, e.g. a badly printed label, it may be needed to prepare one additional secondary tube as replacement. If the error prevented the preparation of additional secondary tube meant for additional aspiration/dispensation cycles, it may be needed to prepare additional secondary tubes.

Instructing the laboratory instrument 200 to prepare an additional secondary tube comprises instructing the gripper 260 to take the additional secondary tube from the input area 250 and bring it to the labelling component 270, and instructing the labelling component 270 to label the additional secondary tube.

At step 530, the computing device 100 checks whether at least one third error condition is satisfied. There is a set of third error conditions that set prerequisites that distinguish between cases in which, because an error has occurred, the tubes should be sent to the error area 800 to avoid further issues down the line, from cases in which, despite the error, the drawing volume can be sent to the processing area 900 without any user evaluation.

For example, a third error condition may require a certain speed of dispensing (below a certain threshold) that does not provoke resuspension, in case the drawing volume is reinserted in the primary tube 280. Another third error condition may be that a test to be carried out on the biological sample is a clinical test whose result is not affected by hemolysis or by characteristics of the platelets.

If no third error condition is satisfied, the method comprises at 540 causing at least the tube that contains the drawing volume to be routed to the error area 800. If the selected action was the reinsertion action 430, the discarding action 420 or the completion action 440, the tube is the primary tube 280. If the selected action was the dispensing action 480, the tube is the secondary tube 290. Exemplarily, the primary tube 280, the secondary tube 290 and, if present, the additional secondary tubes, may all be routed to the error area 800.

If at least one third error condition is satisfied, the method comprises at 550 causing the tube that contains the drawing volume to be routed to the processing area 900. Causing the tube containing the drawing volume to be routed to the error area 800 or the processing area 900 may comprise instructing the laboratory instrument 200 to move said tube to the said area. Alternatively, causing the tube containing the drawing volume to be routed to the error area 800 or the processing area 900 may comprise instructing the laboratory instrument 200 to move said tube to a location from which the user can take said tube and bring it to said area.

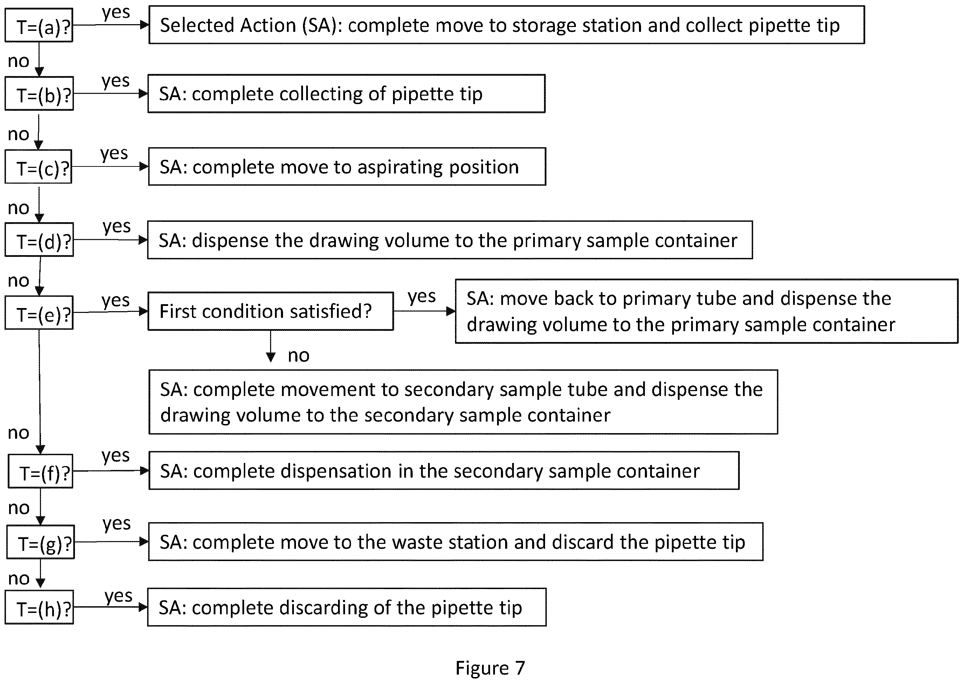

**Figure 7** shows a decision tree for selecting, based on time interval, T, within which the determination of a user-triggered stop occurs, the action that the laboratory instrument shall perform. In particular, the selection of the action is carried out at step 330 of the flow chart of the exemplary method 300 depicted in Figure 4. The time interval T for the cases in which T corresponds to various phases of an aliquoting process, as shown in figure 3.

If T is the phase of moving the aspirating/dispensing device 210 to the storage station 230, T=(a), the selected action is the completion action 440, so the *x-y* plane moving component 220 finishes moving the aspirating/dispensing device 210 to the storage station 230. After instructing the aspirating/dispensing device 210 to perform the completion action 440, the computing device 100 further instructs the laboratory instrument 200, specifically the aspirating/dispensing device 210, to perform another operation, namely to also collect the pipette tip from the storage station 230 (before power is shut off).

If T is the phase of tip collection, T=(b), the selected action is the completion action 440, so the aspirating/dispensing device 210 finishes collecting the pipette tip.

If T is the phase of moving the aspirating/dispensing device 210 to the aspirating position, T=(c), the selected action is the completion action 440, so the *x-y* plane moving component 220 and the z-axis moving component 217 finish moving the aspirating/dispensing device 210 to the aspirating position.

If T is the aspiration phase, T=(d), the selected action is the reinsertion action 430.

If T is the transfer phase, T=(e), the selected action is the dispensing action 480 if the first error condition is not satisfied, while the selected action is the reinsertion action 430 if the first error condition is satisfied. In this example, unlike in figure 5, only the first error condition is checked and not the second error condition.

If T is the dispensation phase, T=(f), the selected action is the completion action 440, so the aspirating/dispensing device 210 finishes dispensing the drawing volume.

If T is the phase of moving the aspirating/dispensing device 210 to the waste station 240, T=(g), the selected action is the completion action 440, so the *x-y* plane moving component 220 finishes moving the aspirating/dispensing device 210 to the waste station 240. After instructing the aspirating/dispensing device 210 to perform the completion action 440, the computing device 100 further instructs the laboratory instrument 200, specifically the aspirating/dispensing device 210, to perform another operation, namely to also discard the pipette tip in the waste station 240 (before power is shut off).

If T is the phase of tip disposal, T=(h), the selected action is the completion action 440, so the aspirating/dispensing device 210 finishes discarding the pipette tip.

## Claims

1. A computer-implemented method comprising:
- instructing a laboratory instrument comprising an aspirating/dispensing device to aliquot a drawing volume of a biological sample contained in a primary sample container;
- determining that an error has occurred, wherein the error affects at least one of: the laboratory instrument, a state of the biological sample, and a state of a secondary sample container configured to receive the drawing volume;
- selecting, based on at least one of a type of the error and a time point at which it is determined that the error has occurred, an action from a plurality of actions to be performed by the laboratory instrument, wherein the plurality of actions comprise a reinsertion action that comprises dispensing the drawing volume to the primary sample container; and
- instructing the laboratory instrument to perform the selected action.

2. The computer-implemented method of claim 1, wherein:
instructing the laboratory instrument to aliquot the drawing volume comprises instructing the aspirating/dispensing device to aspirate the drawing volume from the primary sample container; and
if the time point is during aspiration of the drawing volume, the selected action is the reinsertion action.

3. The computer-implemented method of claim 1 or 2, wherein
wherein the selected action is the reinsertion action only if the error is not a clotting error, wherein the clotting error indicates presence of a clot in the biological sample.

4. The computer-implemented method of claim 3, wherein, if the error is the clotting error:
the selected action is a discarding action, wherein the plurality of actions further comprise the discarding action, the discarding action comprising causing a pipette tip of the aspirating/dispensing device to be discarded.

5. The computer-implemented method of any one of claims 1 to 4, wherein:
instructing the laboratory instrument to aliquot the drawing volume comprises instructing the aspirating/dispensing device to aspirate the drawing volume from the primary sample container and instructing a moving component of the laboratory instrument to transfer the aspirating/dispensing device from the primary sample container to the secondary sample container; and
if the time point at which it is determined that the error has occurred is during transfer of the aspirating/dispensing device, the method further comprises:
- checking whether a first error condition is satisfied;
wherein:
the plurality of actions further comprise a dispensing action, wherein the dispensing action comprises dispensing the drawing volume to the secondary sample container;
if the first error condition is satisfied, the selected action is the reinsertion action;
if the first error condition is not satisfied, the selected action is the dispensing action; and
the first error condition is a condition that the error is indicative of at least one of (a) unavailability of the secondary sample container, (b) defect of the secondary sample container, (c) unreachability of the secondary sample container.

6. The computer-implemented method of any one of claims 1 to 5, wherein:
instructing the laboratory instrument to aliquot the drawing volume comprises instructing the aspirating/dispensing device to aspirate the drawing volume from the primary sample container and instructing a moving component of the laboratory instrument to transfer the aspirating/dispensing device from the primary sample container to the secondary sample container;
if the time point at which it is determined that the error has occurred is during transfer of the aspirating/dispensing device, the method further comprises:
- checking whether the error is a user-triggered stop of the laboratory instrument, wherein the user-triggered stop sets a cut-off timepoint at which power is cut off; and if the error is the user-triggered stop, the method further comprises:
- determining a first distance between the aspirating/dispensing device and the primary sample container;
- determining a second distance between the aspirating/dispensing device and the secondary sample container; and
- checking whether a second error condition is satisfied;
wherein:
the plurality of actions further comprise a dispensing action, wherein the dispensing action comprises dispensing the drawing volume to the secondary sample container;
if the second error condition is satisfied, the selected action is the reinsertion action;
if the second error condition is not satisfied, the selected action is the dispensing action; and
the second error condition is a condition that the second distance is greater than the first distance or a condition that the second distance is greater than or equal to the first distance.

7. The computer-implemented method of any one of claims 1 to 6, wherein the method further comprises:
- checking whether at least one third error condition of a set of third error conditions is satisfied; and
if no third error condition is satisfied, the method further comprises:
causing the sample container containing the drawing volume to be routed to an error area.

8. The computer-implemented method of claim 7, further comprising, if at least one third error condition is satisfied:
- causing the sample container containing the drawing volume to be routed to a processing area.

9. The computer-implemented method of claim 7 or 8, wherein the set of third error conditions comprises at least one of:
a condition that the error is a predetermined error;
a condition that a test to be carried out on the biological sample is a predetermined test.

10. The computer-implemented method of any one of claims 7 to 9, wherein the set of third error conditions comprises a condition that a dispensing speed of the aspirating/dispensing device is equal to or lower than a predetermined value.

11. The computer-implemented method of any one of claims 7 to 10, wherein causing the sample container containing the drawing volume to be routed to the error area comprises setting a flag associated with the sample container containing the drawing volume.

12. A laboratory instrument comprising:
an aspirating/dispensing device configured to aspirate and dispense a drawing volume of a biological sample; and
a processor configured to carry out the method according to any one of the preceding claims.

13. An automated laboratory system comprising:
the laboratory instrument according to the preceding claim; and
an error area.

14. A computer program product comprising instructions which, when the program is executed by a computer, cause the computer to carry out the method according to any one of claims 1 to 11.

15. A computer-readable medium comprising instructions which, when executed by a computer, cause the computer to carry out the method according to any one of claims 1 to 11.
